Europäisches Patentamt

European Patent Office

Office européen des brevets

(11) Publication number:

**0 277 666**

**A1**

# (12) EUROPEAN PATENT APPLICATION

(21) Application number: **88200022.7**

(22) Date of filing: **08.01.88**

(51) Int. Cl.⁴: **G05G 1/04 , B60R 16/02 , B60K 20/04**

(30) Priority: **21.01.87 NL 8700146**

(43) Date of publication of application:
**10.08.88 Bulletin 88/32**

(84) Designated Contracting States:
**DE FR GB IT NL SE**

(71) Applicant: **Volvo Car B.V.**
**Steenovenweg 1**
**NL-5708 HN Helmond(NL)**

(72) Inventor: **Verheijden, Dirk Jan**
**11, Cantelpad**
**NL-5672 DL Eindhoven(NL)**

(74) Representative: **Timmers, Cornelis Herman**
**Johannes et al**
**EXTERPATENT P.O. Box 90649**
**NL-2509 LP 's-Gravenhage(NL)**

(54) **Device for the illuminated indication of the positions of a gear shift lever.**

(57) Device for the illuminated indication of the positions of a car transmission gear lever, comprising a solid block (2) of light-conducting material having a central part (4) provided with an opening (30) for the accommodation of a light source (34) and a number of arms (6, 8, 10, 12, 14, 16, 18) extending therefrom and each ending under a position marking (P, R, N, D, 3, 2, 1).

Fig. 1.

EP 0 277 666 A1

# Device for the illuminated indication of the positions of a gear shift lever.

The invention relates to a device for the illuminated indication of the position of a car transmission gear shift lever, guided in an oblong guide opening, in an indicator panel provided with position markings and adjacent said guide opening.

The object of the invention is to provide a simple, cheap and easily fitted device with which the various position markings of the indicator panel are each illuminated with the same light intensity, using only one illumination lamp.

This object is achieved through the use of a solid block of light-conducting material having a central part provided with an opening for the accommodation of a light source, and having a number of arms extending therefrom and each ending under a position marking.

The light emitted by the centrally positioned light source is evenly distributed over the various arms, so that the ends thereof will all light up evenly and all position markings will be properly illuminated with equal light intensity.Moreover,the device comprising only a single part is extremely simple, requires only a few attachment points, and can be made cheaply of plastic, for example by injection moulding.

In order to ensure that not only the position engaged at a particular moment is indicated, but that the other positions are indicated too, the device is designed in such a way that the end surfaces of the arms lie on the periphery of a circular arc and each end under a light-transmitting opening in the indicator panel, and the gear lever is coupled to a circular arc-shaped plate situated above the ends of the arms and provided with various coloured sectors. In this way the engaged position is distinguished from the others by a position marking lighting up in a contrasting colour.

It is observed that JP-A-59164231 describes a device for illuminating the symbols indicating the positions of a gear shift lever comprising an angle-piece of light-conducting material with a flat transparent end surface bearing the position marking symbols and a light guide plate extending to one edge thereof and provided with light guide projections which are illuminated by a single light source. Thus there is no distinct and separate illumination of each of the position markers.

The invention will be explained with reference to the drawing, in which:

Fig. 1 is a perspective illustration of an embodiment.

Fig. 2 is a perspective illustration of a part of a bearing housing for a gear lever provided with the device according to the invention.

Fig. 3 is a schematic top view of the position markings.

The device according to the invention comprises a solid block of light-conducting plastic such as perspex, indicated in its entirety by reference number 2, having the central part 4 and the arms 6, 8, 10, 12, 14, 16 and 18 extending from it. The central part 4 has a fastening eye 20 with opening 22 and a fastening eye 24 with opening 26. The central part 4 also has formed on it the cylindrical projection 28 containing the central bore 30 for the holder 32 with the illumination lamp 34. The light emitted by it spreads evenly through the central part 4 and the arms, so that the top surfaces of the respective arms emit light evenly.

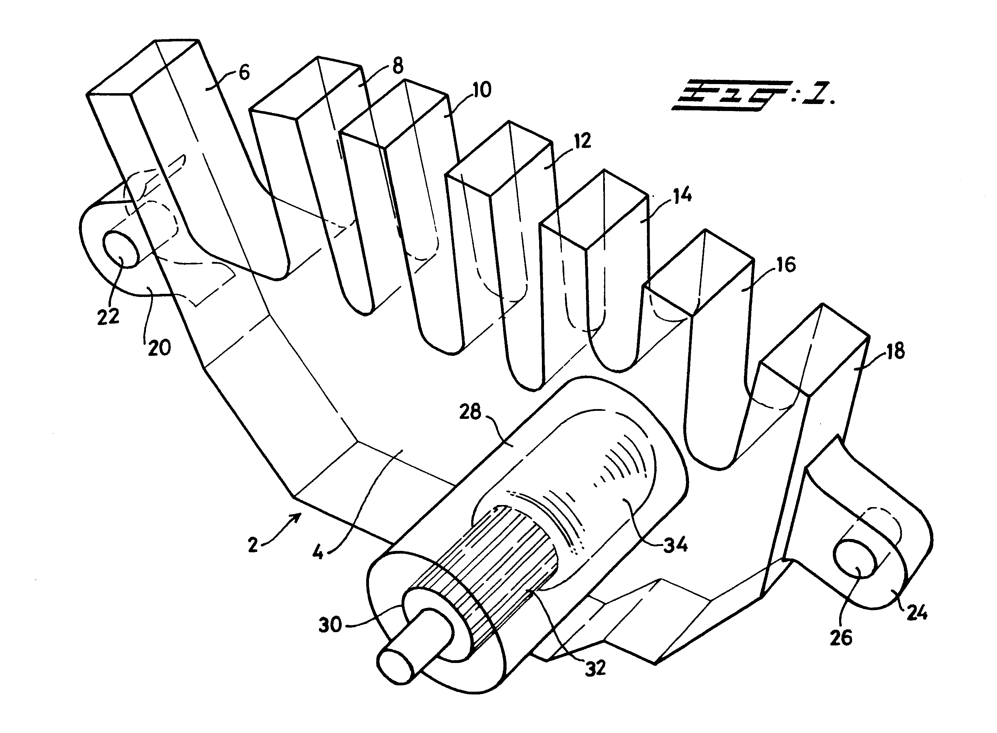

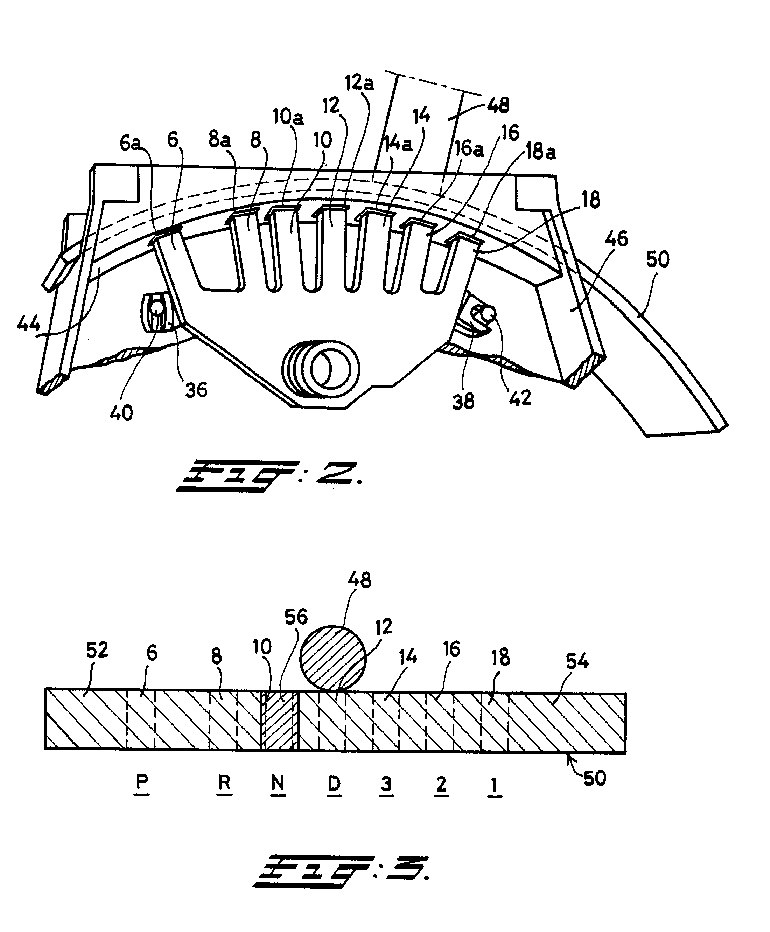

Fig. 2 shows, more or less schematically, the use of the device in the supporting housing 46 for a gear lever of an automatic transmission which, for the sake of simplicity, is only partially shown. As the figure shows, the element 2 is fixed by means of securing clips 36-38 and fixing studs 40-42 projecting from the housing 46, and the respective top ends of the arms 6-18 lie directly underneath the respective openings 6a-18a which are formed in the curved wall 44 of the housing 46. Connected to the gear lever 48, illustrated partially on the right (see also Fig. 3) is a curved plate 50 which has translucent zones in two different colours: the broad green zones 52 and 54, separated by the narrow red zone 56, which corresponds to the position engaged. Each of the positions of the arms 6-18 corresponds to a particular gear position. In the case illustrated in Fig. 3 the red sector 56 is above the end of the arm 10 and is illuminated red, while the other positions which are not engaged are illuminated green. Since the normal position marking front to back is: "Park", "Reverse", "Neutral", "Drive", "3", "2" and "1", this means that for the situation shown in Fig. 3 the neutral position of the transmission is engaged.

It is also pointed out that in Fig. 2, for the sake of clarity, the illumination lamp with its holder is not shown and that, of course, the mutual positions of the arms can be different from that shown in the figures, depending on the transmission.

## Claims

1. Device for the illuminated indication of the positions of a car transmission gear lever (48), guided in an oblong guide opening in an indicator panel (44) provided with position markings and situated next to said guide opening, **characterized** by a solid block (2) of light-conducting material having a central part (4) provided with an opening (30) for the accommodation of a light source (34), and a number of arms (6, 8, 10, 12, 14, 16, 18) extending therefrom and each ending under a position marking (P, R, N, D, 3, 2, 1).

2. Device according to Claim 1, **characterized in that** the end surfaces of the arms (6, 8, 10, 12, 14, 16, 18) lie on the periphery of a circular arc and each end under a light-transmitting opening (6a, 8a, 10a, 12a, 14a, 16a, 18a) in the indicator panel (44), and the gear lever (48) is coupled to a circular arc-shaped plate (50) situated above the ends of the arms and provided with various coloured sectors (52, 54, 56).

Fig. 1.

FIG: 2.

P     R     N     D     3     2     1

FIG: 3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A,D | PATENT ABSTRACTS OF JAPAN, vol. 9, no. 18 (M-353)[1741], 25th January 1985; & JP-A-59 164 231 (NIHON PURASUTO K.K.) 17-09-1984 <br> * Whole document * <br> --- | 1 | G 05 G 1/04 <br> B 60 R 16/02 <br> B 60 K 20/04 |
| A | US-A-4 446 809 (DENNIS) <br> --- | | |
| A | US-A-3 929 092 (HISATERU OGURA) <br> --- | | |
| A | US-A-3 868 923 (LAMBIRIS) <br> ----- | | |

TECHNICAL FIELDS
SEARCHED (Int. Cl.4)

F 16 H
G 05 G
B 60 K
B 60 R

The present search report has been drawn up for all claims

| Place of search | Date of completion of the search | Examiner |
|---|---|---|
| THE HAGUE | 04-05-1988 | BEERNAERT J.E. |

EPO FORM 1503 03.82 (P0401)